# EUROPÄISCHE PATENTSCHRIFT

(11) **EP 0 979 669 B1**
(45) Veröffentlichungstag und Bekanntmachung des Hinweises auf die Patenterteilung: **07.01.2004**
(21) Anmeldenummer: 99810655.3
(22) Anmeldetag: 20.07.1999
(51) Int. Cl.: B01D 50/00, D01H 11/00

(54) **Filtervorrichtung**
Filtering device
Dispositif de filtration

(30) Priorität: 11.08.1998 CH 165698
(43) Veröffentlichungstag der Anmeldung: 16.02.2000
(73) Patentinhaber: MASCHINENFABRIK RIETER AG, 8406 Winterthur (CH)
(72) Erfinder: Scheurer, Paul, 8408 Winterthur (CH); Slavik, Walter, 8320 Fehraltorf (CH)

(56) Entgegenhaltungen:
- EP-A- 0 691 428
- GB-A- 1 366 022
- GB-A- 1 535 990
- US-A- 4 389 931

## Beschreibung

Die Erfindung bezieht sich auf eine Filtervorrichtung zum Abscheiden von Fasern und/oder Staub aus einem Luftstrom mit einer Abscheidevorrichtung, die einen Kopfbereich aufweist, in welchen ein Lufteinlassrohr tangential mündet und mit einem unterhalb des Kopfbereiches angebrachten, luftdurchlässigen Hohlfilter, an dessen untere Abgabeöffnung ein Sammelelement anschliesst und das Sammelelement mit einer Zuführöffnung versehen ist, die etwa die gleiche Querschnittsfläche aufweist wie die Abgabeöffnung des Hohlfilters und dieser gegenübersteht und Mittel vorgesehen sind, welche die Zuführöffnung auf eine ringförmige Durchlassöffnung zum Sammelelement beschränken.

Aus der EP-A-0 691 428 ist eine Filtervorrichtung bekannt, wobei die mit Staub und Fasern versehene Luft in einen Kopfbereich über ein Zuführrohr tangential eingeblasen wird. Unterhalb des Kopfbereiches ist hierbei ein zylinderförmiger Hohlfilter angebracht der luftdurchlässig ist. Die Luft kann dabei durch den Siebmantel des Hohl-filters entweichen, wobei die mitgeführten Fasern und Staub an der Innenfläche des Siebmantels zurückgehalten und nach unten abgeführt werden. Dabei gelangen diese in einen geschlossenen Ringwandabschnitt und von dort über eine Öffnung in einen Sammelbehälter. Der Sammelbehälter kann dabei als Schublade oder verschiebbarer Wagen ausgebildet sein. Die Querschnittsfläche des Ringwandabschnittes entspricht der Querschnittsfläche des Hohlfilters. Der Ringwandabschnitt ist unten mit einer Wandung versehen, in welcher eine Abgabeöffnung für die abgeschiedenen Bestandteile vorgesehen ist. Diese nach unten zum Sammelbehälter führende Abgabeöffnung nimmt nur einen kleinenTeilabschnitt des Querschnittes des Ringwandabschnittes ein und wird teilweise mit einer Prallwand kombiniert. Mit dieser Ausführung wird zwar verhindert, dass sich bereits in den Sammelbehälter abgegebener Staub und Faserflug in einem resultierenden Gegenluftstrom wieder nach oben in den Bereich des Filtermantels bewegen können, jedoch weist diese Einrichtung Nachteile hinsichtlich der Verschmutzung im Bereich der Abgabeöffnung auf. Durch das tangentiale Einblasen der verschmutzten Luft im Kopfbereich wird eine Luftströmung erzeugt, welche sich spiralförmig nach unten und im wesentlichen im Bereich der Aussenwand des Abscheiders fortbewegt. Ein grosser Teil dieser Luft wird dann über den Hohlzylinder nach aussen abgeführt, wobei die Restluft mit den abgeschiedenen Fasern und Staub in den Bereich der Abgabeöffnung gelangen. Die hier gezeigten Abgabeöffnungen sind relativ klein und weisen Kanten auf, die quer zur spiralförmigen Luftströmung ausgerichtet sind. Dabei besteht die Gefahr, dass sich Fasern an diesen Kanten festsetzen können, wodurch ein weiteres Festsetzen von nachfolgenden Fasern und Staub in diesem Bereich begünstigt wird. Diese Ablagerungen können bis zu einem teilweisen Verschluss dieser Abgabeöffnung führen. Deshalb ist es bei dieser Ausführung zur Aufrechterhaltung ihrer Funktion notwendig regelmässig Reinigungsarbeiten durchzuführen.

Aus der DE-A-35 27 656 ist eine Filtereinrichtung bekannt, wobei zum Reinigen der Filterflächen spezielle über Zylinder betätigbare Abstreifelemente vorgesehen sind.

Des weiteren ist aus der DE-A-29 10 564 eine Abscheideeinrichtung für Fasern und Staub bekannt, wobei zwei mit Abstand zueinander konzentrisch angeordnete Schlauchfilter vorgesehen sind. Diese Einrichtung ist insbesondere vorgesehen, um die im Luftstrom mitgeführten Fasern separat von den im Luftstrom befindlichen Staubteilchen abzuscheiden. Der innere Schlauchfilter weist dabei eine grössere Porösität als der äussere auf. Dadurch soll erreicht werden, dass die Fasern am inneren Filtermantel abgeschieden werden, während die Staubteilchen den inneren Filtermantel durchdringen und am äusseren Siebmantel zurückgehalten werden. Die Entsorgung der nach unten abgeschiedenen Fasern sowie der nach unten in einen Trichter abgeführten Staubteile erfolgt in zwei Verfahrensschritten bzw. mittels unterschiedlicher Sammelbehälter. Es sind hierbei keine Vorkehrungen getroffen, die eine Rückströmung über eine nicht kontrollierbare Luftströmung von bereits nach unten abgeschiedenen Fasern in den Bereich des Filterkörpers unterbinden.

Aus der GB-A-1 535 990 und der US-A-4,389,931 sind Filtervorrichtungen bekannt, bei welchen das von der Luft zu trennende Fasergut und dergleichen im Kopfbereich der jeweiligen Vorrichtung zugeführt wird. Anschliessend wird das Fasergut nach unten unter Einwirkung eines angetriebenen und mittig angeordneten Zwangsförderers entlang eines Siebmantels geführt, wo die mitgeführte Luft entweichen kann. Das von der Luft getrennte Fasergut und dergleichen gelangt über eine Abgabeöffnung am Ende des Siebmantels in ein Sammelelement durch eine ringförmige Öffnung, welche durch den Zwangsförderer und die Abgabeöffnung gebildet wird.

Die dabei verwendeten Zwangsförderer sind mit spiralförmig angeordneten Förderelementen versehen. Nachteilig bei den beschriebenen Ausführungen mit einem Zwangsförderer ist, dass es insbesondere im Bereich dieser Zwangsförderer und den dabei vorhandenen Förderelementen zu Faserablagerungen und zu Verschmutzungen kommen kann. Das heisst, jede innerhalb der Filtervorrichtung zusätzlich vorhandene Kante, die sich im Bereich des Materialflusses befindet, erhöht die Gefahr von Ablagerungen und Verschmutzungen. Daraus resultiert, dass derartige Vorrichtungen öfters gewartet, beziehungsweise gereinigt werden müssen, um ihre Funktion zu gewährleisten.

Ausgehend von dem genannten Stand der Technik stellt sich die Erfindung nunmehr die Aufgabe eine einfache und wartungsarme Filtervorrichtung zum Abscheiden von Fasern und Staub vorzuschlagen. Dabei soll eine unkontrollierte Rückströmung von bereits in einem Sammelelement abgelegten Faser-, bzw. Staubteilchen zum Filterelement unterbunden und Ablagerungen und Verschmutzungen im Bereich der Filtervorrichtung weitgehend vermieden werden.

Diese Aufgabe wird dadurch gelöst, indem das Mittel zur Bildung einer ringförmigen Durchlassöffnung zum Sammelelement aus einer Scheibe gebildet ist, welche zentrisch zur Zufuhröffnung angeordnet ist.

Durch diese Einrichtung wird einerseits eine unkontrollierte Rückströmung von bereits im Sammelelement abgelegten Fasern und Staub unterbunden und andererseits durch die Bildung einer ringförmigen Durchlassöffnung nur mittels einer Scheibe ein Anhaften und Festsetzen von Fasern und Staubteilchen im Bereich der Durchlassöffnung und innerhalb der Filtervorrichtung vermieden. Durch die gebildete ringförmige Durchlassöffnung mit einer Scheibe ist keine Kante vorhanden, die quer zur Luftzirkulation ausgerichtet ist.

Es wird vorgeschlagen, dass die Scheibe etwa mittig in radialem Abstand zur Peripherie einer kreisförmigen Zuführöffnung angebracht ist und der radiale lichte Abstand der Scheibe zur kreisförmigen Zuführöffnung zwischen 20 und 80 mm, vorzugsweise 50 mm, beträgt.

Dadurch wird einerseits der problemlose Durchtritt von mitgeführten langen Fasern durch die ringförmige Durchlassöffnung gewährleistet und andererseits eine unkontrollierte Luftrückströmung unterbunden.

Des weiteren wird eine Vorrichtung vorgeschlagen, wobei eine obere Begrenzungswand des Sammelelementes - in horizontaler Richtung gesehen - die Querschnittfläche der Abgabeöffnung des Hohlfilters überragt und der Durchmesser der Scheibe die Zuführöffnung überragt und unterhalb und im Abstand zu der oberen Begrenzungswand des Sammelelements angeordnet ist.

Vorzugsweise ist dabei der Abstand zur oberen Begrenzungswand zwischen 20 und 80 mm, bzw. vorzugsweise 50 mm, gewählt. Dadurch wird ebenfalls das Unterbinden einer unkontrollierten Luftströmung nach oben und den problemlosen Durchtritt, auch von mitgeführten langen Fasern nach unten gewährleistet.

Eine derartige horizontale Überragung der Abgabeöffnung des Hohlfilters durch die obere Begrenzungswand des Sammelelementes ist auch bei der zuvorgenannten Ausführung möglich, wobei die Scheibe zentrisch innerhalb der Zuführöffnung angeordnet ist.

Des weiteren wird vorgeschlagen, dass sich der Hohlfilter in Richtung zu seiner Abgabeöffnung im Querschnitt verjüngt, bzw. die Form eines Kegelstumpfes, aufweist. Dabei kann das Verhältnis der Querschnittsflächen der Eintrittsöffnung und der Abgabeöffnung des Hohlfilters zwischen 1,4 zu 1,0 und 1,1 zu 1,0, vorzugsweise 1,2 zu 1,0 betragen. Durch diese Anordnung wird erreicht, dass der Hohlfilter durch die spiralförmige Luftführung einem Selbstreinigungseffekt unterzogen wird.

Derartige konische Ausbildungen von Filterelementen sind bereits aus der GB-A- 1 535 990, der DE-A- 35 40 688 und der DE-A- 196 48 561 zu entnehmen.

Die konische-Ausbildung ist dabei so gewählt, so dass einerseits ein Selbstreinigungseffekt auftritt und andererseits Ablagerungen auf dem konischen Filtermantel vermieden werden. Daraus resultiert, dass die Konizität des Filters einen bestimmten Betrag nicht überschreiten darf.

Man erhält eine besonders einfache und kostengünstige Ausführung, wenn der Hohlfilter aus einem luftdurchlässigen Filtertuch besteht, das zwischen dem Kopfbereich und dem Sammelelement in seiner Längsrichtung unter Spannung gehalten wird.

Zur Regelung des Lufthaushaltes und zur Beeinflussung der Leistung, welche von einem Gebläse zur Förderung aufzubringen ist, wird vorgeschlagen, dass das Lufteinlassrohr im Kopfbereich - in bezug auf seine Längsrichtung und in Förderrichtung gesehen - mit einer sich vergrössernden Querschnittsfläche versehen ist. Dadurch wird gewährleistet, dass einem vorgeschalteten Gebläseaggregat kein Gegendruck z.B. durch Reibung an den Rohrwänden entgegengesetzt wird, so dass dieses die volle Leistung für den Lufttransport aufwenden kann.

Vorzugsweise ist diesem Lufteinlassrohr im Kopfbereich ein Radialgebläse vorgeschaltet.

Des weiteren wird vorgeschlagen, dass das Sammelelement mit einer austauschbaren Schublade versehen ist. Dabei kann das Mittel über welches die ringförmige Durchlassöffnung gebildet wird, an dieser austauschbaren Schublade befestigt sein.

Als weitere Ausführung wird vorgeschlagen, dass der Sammelbehälter mit wenigsten einer verschwenkbaren Klappe versehen ist. Es ist vorteilhaft, das Scharnier der Klappe im Bereich der unteren Begrenzung des Sammelelements anzuordnen. Diese Ausführung gewährleistet, dass nach Herunterklappen der Klappe eine einfache und gut zugängliche Entsorgung des Sammelelements von Hand oder auch mit Maschinenunterstützung möglich ist.

Weitere Vorteile sind anhand der nachfolgenden Ausführungsbeispiele näher aufgezeigt und beschrieben. Es zeigen:
- Fig. 1: eine schematische Seitenansicht einer Filtervorrichtung,
- Fig. 2: eine schematische Draufsicht nach Fig. 1,
- Fig. 3: eine schematische Teilansicht nach Fig. 1 im Bereich des Sammelelements mit einer weiteren Ausführungsvariante, und
- Fig. 4: eine schematische Teilansicht nach Fig. 1 mit einer weiteren Ausführungsvariante.

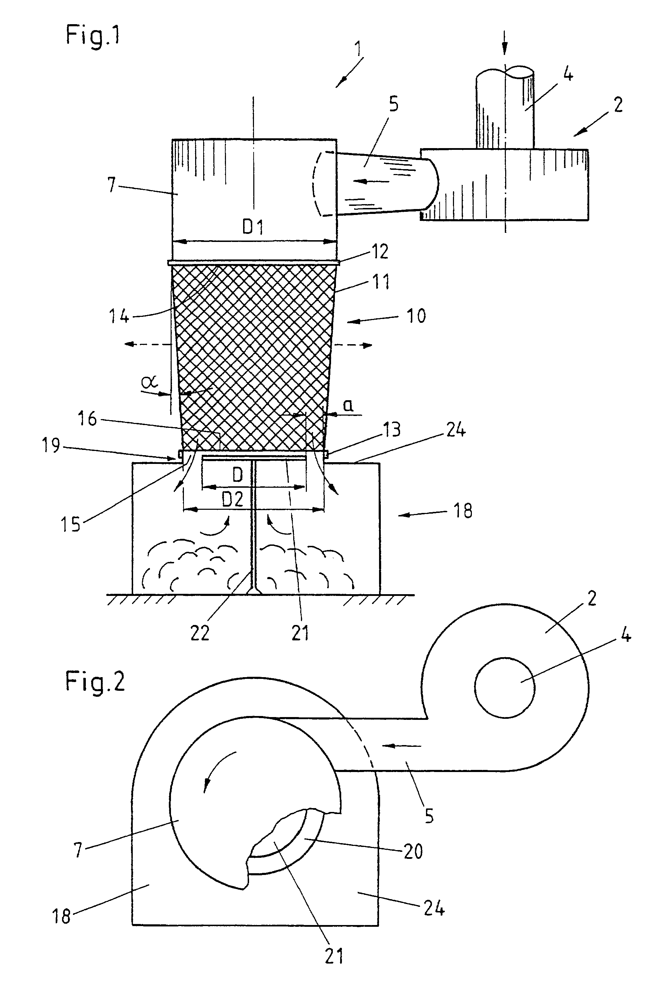

Fig. 1 zeigt eine Filtervorrichtung 1, welcher ein Radialgebläse 2 vorgeschaltet ist. Das Radialgebläse 2 ist mit einem Zuführrohr 4 versehen, über welches die mit Staub und Faserteilen vermengte Luft dem Radialgebläse zugeführt wird. Dieser Luftstrom kann z.B. von einer Textilmaschine stammen, bei welcher an verschiedenen Stellen Absaugkanäle angebracht sind, um die Maschine, bzw. die Maschinenelemente sauber zu halten.

Über ein etwa tangential am Radialgebläse 2 angebrachtes Auslassrohr 5 (siehe auch Fig. 2) wird die verschmutzte Luft in einen geschlossenen und etwa zylindrischen Kopfbereich 7 der Filtervorrichtung 1 radial eingeblasen.

Wie insbesondere in Fig. 1 zu entnehmen, weist das Rohr 5 einen Querschnitt auf, der sich vom Ausgang des Radialgebläses 2 bis zum Eingang des Kopfbereiches 7 leicht vergrössert. Dadurch soll erreicht werden, dass die Luft ungehindert und ohne Gegendruck (welcher z.B. durch Reibung im Rohr 5 entstehen könnte) in den Kopfbereich 7 überführt werden kann. Dies ermöglicht, dass die vom Gebläse 2 aufgebrachte Leistung ohne grosse Verluste für den Lufttransport eingesetzt werden kann.

An den Kopfbereich 7, der unten mit einer Öffnung mit dem Durchmesser D1 versehen ist, schliesst ein Hohlfilter 10 an, der über ein schematisch gezeigtes Klemmteil 12 am Kopfbereich 7 befestigt ist. Der Hohlfilter 10 ist mit einem feinmaschigen Filtertuch 11 versehen und verjüngt sich um den Winkel α bis zu seiner Abgabeöffnung 16, welche mit einer Zuführöffnung 15 eines nachfolgenden Sammelkastens 18 korrespondiert. Die Abgabeöffnung 16 und die Zuführöffnung 15 weisen jeweils einen Durchmesser D2 auf. Das Filtertuch 11 ist mit seinem unteren Ende im Bereich seiner Abgabeöffnung 16 an einem ringförmigen Flansch 19 des Sammelkastens 18 über ein schematisch gezeigtes Klemmteil 13 befestigt. Die Klemmteile 12 und 13 weisen eine nicht gezeigte lösbare Verriegelung auf.

Zentrisch zur Zuführöffnung 15 im Bereich des Flansches 19 ist eine Scheibe 21 angeordnet, die über einen Haltestab 22 abgestützt ist, der am Boden des Sammelkastens 18 befestigt ist. Die Scheibe 21 weist einen Durchmesser D auf und bildet mit der Zuführöffnung 15 mit dem Durchmesser D2 eine ringförmige Durchlassöffnung 20 mit der Breite a.

Nachfolgend wird nun kurz die Funktion dieser Einrichtung beschrieben:

Die über das Rohr 4 dem Axialgebläse 2 mit Staub und Faserteilen vermengte Luft wird über das Rohr 5 tangential in den Kopfbereich 7 eingeblasen. Die Luftströmung bewegt sich dann spiralförmig an der inneren Wandung des Kopfbereiches 7 nach unten und gelangt auf die Innenwand des Filtertuches 11 des Hohlfilters 10. Im Bereich dieses Hohlfilters 10 kann die Luft das Filtertuch 11 durchdringen und wird zum grössten Teil nach aussen in die Umgebung abgegeben, wie dies durch die gestrichelten Pfeile schematisch dargestellt ist. Die Staub- und Faserteile werden an der Innenwand des Filtertuches 11 zurückgehalten und nach unten in Richtung des Sammelkastens 18 abgeführt. Dort gelangen diese abgeschiedenen Teile in den Bereich der ringförmigen Durchlassöffnung 20 und werden in den Innenraum des Sammelkastens 18 abgegeben. Eventuelle Rückströmungen, wie dies z.B. durch die schematisch gezeigten Pfeile angedeutet ist, werden durch die Scheibe 21 unterbunden. Dadurch wird verhindert, dass bereits in den Sammelkasten 18 abgegebene Faser- und Staubteilchen nicht wieder nach oben in den Bereich des Hohlfilters 10 gelangen können, um sich am Filtertuch 11 abzusetzen. Dadurch wird eine wartungsfreie Filtervorrichtung geschaffen. Durch die konische Ausbildung (Winkel α) des Hohlfilters 10 wird erreicht, dass die Innenseite des Filtertuches 11 dem nach unten führenden Luftstrom einen gewissen Widerstand entgegensetzt. Daraus resultiert, dass die Luftströmung auf der Innenseite des Filtertuches 11 eine Abstreifwirkung ausübt, wodurch das Filtertuch einem sogenannten Selbstreinigungseffekt unterworfen ist.

Die Anordnung des Kopfbereiches 7 und des Filterkastens 18 ist so getroffen, so dass das Filtertuch 11, das über die Klemmteile 12 und 13 befestigt ist, im eingebauten Zustand unter leichter Spannung in Längsrichtung gehalten wird. Dadurch wird gewährleistet, dass sich keine Falten im Filtertuch 11 bilden und die gesamte Fläche des Filtertuches als Abscheidefläche zur Verfügung steht. Ausserdem wird dadurch vermieden, dass sich Ablagerungen festsetzen können.

Sobald der Sammelkasten 18 eine bestimmte Füllmenge erreicht, kann das Klemmteil 13 geöffnet werden, wodurch die Verbindung zwischen dem Hohlfilter 10 und dem Sammelkasten 18 gelöst ist. Der Sammelkasten 18 kann dann entfernt und geleert werden. Für diesen Entleerungsvorgang wäre es denkbar, dass die Scheibe 21 mit dem Haltestab 22 lösbar am Sammelkasten befestigt ist. Nach Entfernen der Scheibe 21 steht dann die volle Öffnung 15 zum Entleeren zur Verfügung. Es wäre jedoch auch denkbar, den Sammelkasten 18 mit zusätzlichen verschliessbaren Öffnungen zu versehen, um die Entleerung vorzunehmen.

Anstelle des Sammelkastens 18 könnte auch ein Abfallsack verwendet werden, der im Bereich der Abgabeöffnung 16 des Hohlfilters 10 abnehmbar befestigt ist. Bei einer derartigen Ausführung wäre der Haltestab 22 zur Fixierung der Scheibe 21 oberhalb der Scheibe 21 angebracht und im Kopfbereich 7 befestigt. Mit der beschriebenen Einrichtung (nicht gezeigt) könnte zum Entsorgen lediglich ein Austausch eines leeren Abfallsackes gegen den vollen Abfallsack zum Entsorgen vorgenommen werden.

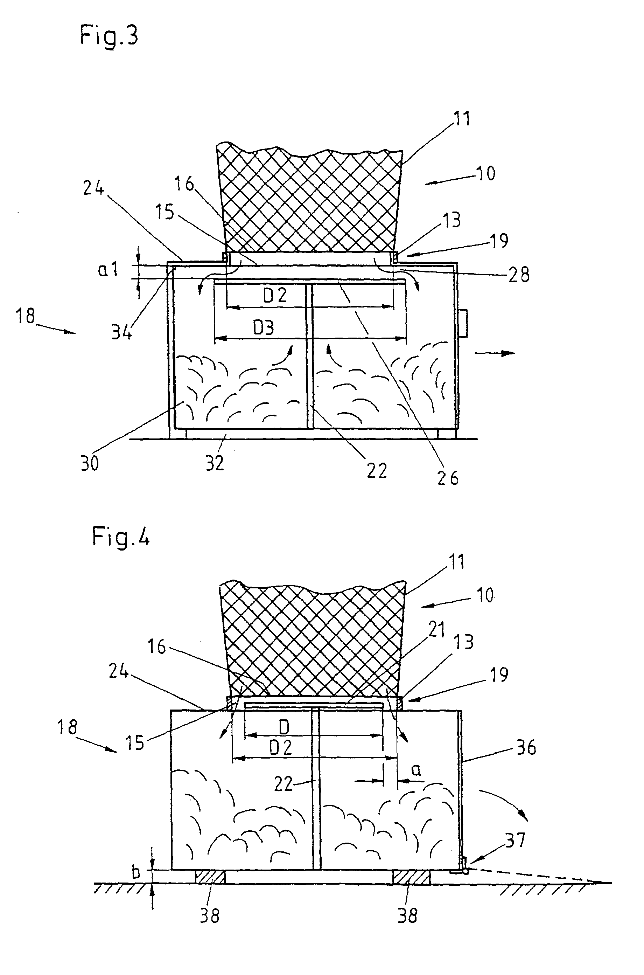

In Fig. 3 wird schematisch der untere Teil der Filtervorrichtung 1 gezeigt, mit einer weiteren Ausführungsform im Bereich des Sammelkastens 18. Hierbei ist in einem Abstand a1 zur oberen Wand 24 des Sammelkastens 18 eine Scheibe 26 angeordnet, deren Durchmesser D3 den Durchmesser D2 der Abgabeöffnung 16 bzw. der Zuführöffnung 15 überragt. Das Filtertuch 11 ist hierbei ebenfalls über ein Klemmteil 13 an dem Flansch 19 des Sammelkastens 18 befestigt. Die im Bereich der Innenwand des Filtertuches 11 abgeschiedenen Staub- und Faserteile werden hierbei nach unten abgeführt und gelangen über die vertikal ausgerichtete ringförmige Durchlassöffnung 28 mit der Breite a1 in den Innenraum einer Schublade 30, die in den Sammelkasten 18 eingeschoben ist. Im Sammelkasten 18 sind schematisch Gleitführungen 32 gezeigt, auf welchen die Schublade 30 beim Ein- bzw. Ausschieben geführt wird. Im oberen Bereich der Schublade 30 kann eine schematisch dargestellte umlaufende Dichtlippe 34 vorgesehen sein, welche in eingeschobenem Zustand (wie gezeigt) dichtend an der oberen Wand 24 des Sammelkastens 18 anliegt. Dadurch wird verhindert, dass der gesammelte Staub bzw. Faserteile aus der Schublade 30 in den übrigen Bereich des Sammelkastens 18 gelangen kann. Es wäre auch denkbar, die Schublade 30 anstelle der Gleitführungen 32 über an der Schublade befestigte Laufräder (nicht gezeigt) in den Sammelkasten 18 einzuschieben. Eine ähnliche Ausführung ist z.B. in der bereits beschriebenen EP-A-0 691 428 zu entnehmen.

Diese Ausführung gewährleistet, dass die Schublade 30, nachdem ein entsprechender Füllstand erreicht ist, problemlos seitlich aus dem Sammelkasten 18 herausgeschoben werden kann, ohne Behinderung durch die Scheibe 26, welche im Gegensatz zur ersten Ausführung unterhalb der oberen Wand 24 angeordnet ist.

In Fig. 4 wird ein weiteres Ausführungsbeispiel gezeigt, wobei die Scheibe 21 entsprechend dem Ausführungsbeispiel nach Fig. 1 innerhalb der Zuführöffnung 15 angeordnet ist und über den Haltestab 22 am Boden des Sammelkastens 18 befestigt ist. Die übrigen Teile und Befestigungen im Bereich des Flansches 19 bei der Zuführöffnung 15 entsprechen dem Ausführungsbeispiel nach Fig. 1, wodurch hierbei nicht mehr speziell darauf eingegangen wird. Neu bei dieser Ausführung gegenüber der Ausführung nach Fig. 1 ist die Anbringung einer Klappe 36, welche um ein Scharnier 37 nach unten verschwenkbar ist, wie dies gestrichelt gezeichnet ist. Der Sammelkasten 18 ist dabei auf Aufsätzen 38 aufgesetzt und weist dadurch einen Abstand b zum Boden auf. Dadurch kann die Klappe 36 bis zu einer schräg nach unten abfallenden Position verschwenkt werden, wodurch das Entnehmen des im Sammelkasten 18 gesammelten Abfallmaterials vereinfacht wird. Es wäre z.B. denkbar, dass über die nach unten verschwenkte Klappe ein Abfallsack gestülpt wird, in welchen dann das Abfallmaterial manuell hineingeschoben wird. Mit dieser Einrichtung ist es möglich, einerseits den Sammelkasten in einer fest eingebauten Position zu belassen und andererseits eine einfache und kostengünstige Entsorgung durchzuführen.

Mit den gezeigten Anordnungen der Filtervorrichtung wird eine einfache und kostengünstige Vorrichtung zur Abscheidung von Staub und Faserteilen gezeigt, welche funktionssicher ist und vom wirtschaftlichen Standpunkt her gesehen, auch bereits bei kleineren Maschineneinheiten individuell einsetzbar ist.

## Patentansprüche

1. Filtervorrichtung (1) zum Abscheiden von Fasern und /oder Staub aus einem Luftstrom mit einer Abscheidevorrichtung, die einen Kopfbereich (7) aufweist, in welchen ein Lufteinlassrohr (5) tangential mündet und mit einem unterhalb des Kopfbereiches (7) angebrachten, luftdurchlässigen Hohlfilter (10), an dessen untere Abgabeöffnung (16) ein Sammelelement (18) anschliesst und das Sammelelement (18) mit einer Zuführöffnung (15) versehen ist, die etwa die gleiche Querschnittsfläche aufweist wie die Abgabeöffnung (16) des Hohlfilters (10) und dieser gegenübersteht und Mittel (21) vorgesehen sind, welche die Zuführöffnung (15) auf eine ringförmige Durchlassöffnung (20) zum Sammelelement (18) beschränken, **dadurch gekennzeichnet, dass** das Mittel aus einer Scheibe (21) gebildet ist, welche zentrisch zur Zuführöffnung (15) angeordnet ist.

2. Filtervorrichtung nach Anspruch 1, **dadurch gekennzeichnet, dass** die Scheibe (21) etwa mittig und in radialem Abstand zur Peripherie einer kreisförmigen Zuführöffnung (15) angebracht ist und der radiale Abstand zwischen 20 und 80 mm, vorzugsweise 50 mm beträgt

3. Filtervorrichtung nach Anspruch 1, **dadurch gekennzeichnet, dass** eine obere Begrenzungswand (24) des Sammelelementes (18) - in horizontaler Richtung gesehen die Querschnittfläche der Abgabeöffnung (16) des Hohlfilters überragt und der Durchmesser (D3) der Scheibe (26) die Zuführöffnung (15) überragt und unterhalb und im Abstand (a1) zu der oberen Begrenzungswand (24) des Sammelelementes (18) angeordnet ist.

4. Filtervorrichtung nach Anspruch 3, **dadurch gekennzeichnet, dass** der Abstand (a1) zur oberen Begrenzungswand (24) zwischen 20 und 80 mm, vorzugsweise 50 mm beträgt.

5. Filtervorrichtung nach einem der Ansprüche 1 bis 4, **dadurch gekennzeichnet, dass** sich der Hohlfilter (10) in Richtung zu seiner Abgabeöffnung im Querschnitt verjüngt.

6. Filtervorrichtung nach Anspruch 5, **dadurch gekennzeichnet, dass** der Hohlfilter (10) die Form eines Kegelstumpfes aufweist.

7. Filtervorrichtung nach einem der Ansprüche 5 bis 6, **dadurch gekennzeichnet, dass** das Verhältnis der Querschnittsflächen der Eintrittsöffnung (14) und der Abgabeöffnung (16) des Hohlfilters (10) zwischen 1,4 :1,0 und 1,1 : 1,0, vorzugsweise 1,2 : 1,0 beträgt.

8. Filtervorrichtung nach einem der Ansprüche 1 bis 7, **dadurch gekennzeichnet, dass** der Hohlfilter (10) aus einem luftdurchlässigen Filtertuch (11) besteht, das zwischen dem Kopfbereich (7) und dem Sammelelement (18) in seiner Längsrichtung unter Spannung gehalten wird.

9. Filtervorrichtung nach einem der Ansprüche 1 bis 8, **dadurch gekennzeichnet, dass** das Lufteinlassrohr (5) im Kopfbereich (7) - in bezug auf seine Längsrichtung und in Förderrichtung gesehen - mit einer sich vergrössernden Querschnittsfläche versehen ist.

10. Filtervorrichtung nach einem der Ansprüche 1 bis 9, **dadurch gekennzeichnet, dass** dem Lufteinlassrohr (5) im Kopfbereich (7) eine Radialgebläse (2) vorgeschaltet ist

11. Filtervorrichtung nach einem der Ansprüche 1 bis 10, **dadurch gekennzeichnet, dass** das Sammelelement (18) mit einer austauschbaren Schublade (30) versehen ist.

12. Filtervorrichtung nach einem der Ansprüche 1 bis 10, **dadurch gekennzeichnet, dass** der Sammelbehälter (18) mit wenigstens einer verschwenkbaren Klappe (36) versehen ist.

13. Filtervorrichtung nach Anspruch 12, **dadurch gekennzeichnet, dass** das Scharnier (37) der Klappe (36) im Bereich der unteren Begrenzung des Sammelelement (18) angeordnet ist.

## Claims

1. A filter device (1) for the separation of fibres and fine dust from an air flow with a separation device which exhibits a head area (7) into which an air inlet pipe (5) opens tangentially, and with a hollow air-permeable filter (10) located beneath the head area (7), connected to the lower outlet aperture (16) of which is a collection element (18), and the collection element (18) is provided with an inlet aperture (15) which exhibits approximately the same cross-sectional surface as the outlet aperture (16) of the hollow filter (10) and is located opposite this, and means (21) are provided for which restrict the inlet aperture (15) to a ring-shaped passage aperture (20) to the collection element (18), **characterised in that** the means are formed from a disk (21) which is arranged centrically to the inlet aperture (15).

2. The filter device according to Claim 1, **characterised in that** the disk (21) is located approximately centrally and at a radial distance interval from the periphery of a circular inlet aperture (15), and the radial distance interval amounts to between 20 and 80 mm, for preference 50 mm.

3. The filter device according to Claim 1, **characterised in that** an upper limitation wall (24) of the collection element (18), seen in the horizontal direction, projects over the cross-sectional surface of the outlet aperture (16) of the hollow filter and the diameter (D3) of the disk (26) projects over the inlet aperture (15) and is arranged at a distance interval (a1) to the upper limitation wall (24) of the collection element (18).

4. The filter device according to Claim 3, **characterised in that** the distance interval (a1) to the upper limitation wall (24) amounts to between 20 and 80 mm, for preference 50 mm.

5. The filter device according to one of Claims 1 to 4, **characterised in that** the hollow filter (10) tapers in cross-section in the direction of its outlet aperture.

6. The filter device according to Claim 5, **characterised in that** the hollow filter (10) exhibits the form of a truncated cone.

7. The filter device according to one of Claims 5 to 6, **characterised in that** the ratio of the cross-section surface of the inlet aperture (14) and of the outlet aperture (16) of the hollow filter (10) is between 1.4 : 1.0 and 1.1 : 1.0, for preference 1.2 : 1.0.

8. The filter device according to one of Claims 1 to 7, **characterised in that** the hollow filter (10) consists of an air-permeable filter fabric (11), which is retained under tension in its longitudinal direction between the head area (7) and the collection element (18).

9. The filter device according to one of Claims 1 to 8, **characterised in that** the air inlet pipe (5) in the head area (7), seen in relation to its longitudinal direction and in the direction of conveyance, is provided with an enlarged cross-section surface.

10. The filter device according to one of Claims 1 to 9, **characterised in that** arranged upstream of the air inlet pipe (5) in the head area (7) is a radial fan (2).

11. The filter device according to one of Claims 1 to 10, **characterised in that** the collection element (18) is provided with a replaceable drawer element (30).

12. The filter device according to one of Claims 1 to 10, **characterised in that** the collection container or element (18) is provided with at least one pivotable flap (36).

13. The filter device according to Claim 12, **characterised in that** the hinge (37) of the flap (36) is arranged in the area of the lower delimitation of the collection element (18).

## Revendications

1. Dispositif filtrant (1) servant à extraire des fibres et/ou de la poussière d'un courant d'air, avec un dispositif de séparation qui possède une zone de tête (7), dans laquelle un tuyau d'entrée d'air (5) débouche tangentiellement, et avec un filtre creux (10) perméable à l'air, disposé en dessous de la zone de tête (7), auquel un élément collecteur (18) est adjoint à son ouverture inférieure de livraison (16), et où l'élément collecteur (18) est pourvu d'une ouverture d'alimentation (15) qui possède à peu près la même surface de section que l'ouverture de livraison (16) du filtre creux (10) et qui est disposée face à celle-ci, et des moyens (21) sont prévus, lesquels limitent l'ouverture d'alimentation (15) à une ouverture de passage (20), en forme d'anneau, dirigée vers l'élément collecteur (18), **caractérisé par le fait que** le moyen est formé par un disque (21), lequel est disposé centré par rapport à l'ouverture d'alimentation (15).

2. Dispositif filtrant selon revendication 1, **caractérisé par le fait que** le disque (21) est disposé à peu près au centre et avec une distance radiale par rapport à la périphérie d'une ouverture d'alimentation (15) en forme de cercle, et la distance radiale est comprise entre 20 et 80 mm, et s'élève de préférence à 50 mm.

3. Dispositif filtrant selon revendication 1, **caractérisé par le fait que** - vu dans le sens horizontal - une paroi de limitation supérieure (24) de l'élément collecteur (18) dépasse la surface de section de l'ouverture de livraison (16) du filtre creux, et le diamètre (D3) du disque (26) dépasse l'ouverture d'alimentation (15), et le disque est disposé en dessous et avec une distance (a1) par rapport à la paroi de limitation supérieure (24) de l'élément collecteur (18).

4. Dispositif filtrant selon revendication 3, **caractérisé par le fait que,** par rapport à la paroi de limitation supérieure (24), la distance (a1) est comprise entre 20 et 80 mm, et s'élève de préférence à 50 mm.

5. Dispositif filtrant selon l'une des revendications 1 à 4, **caractérisé par le fait que** le filtre creux (10) se réduit en section, dans la direction allant vers son ouverture de livraison.

6. Dispositif filtrant selon revendication 5, **caractérisé par le fait que** le filtre creux (10) possède la forme d'un cône tronqué.

7. Dispositif filtrant selon l'une des revendications 5 à 6, **caractérisé par le fait que** le rapport des surfaces de section de l'ouverture d'entrée (14) et de l'ouverture de livraison (16) du filtre creux (10) est compris entre 1,4 : 1,0 et 1,1 : 1,0, et s'élève de préférence à 1,2 : 1,0.

8. Dispositif filtrant selon l'une des revendication 1 à 7, **caractérisé par le fait que** le filtre creux (10) est constitué d'un tissu filtrant (11) perméable à l'air, lequel est maintenu sous tension, dans sa direction longitudinale, entre la zone de tête (7) et l'élément collecteur (18).

9. Dispositif filtrant selon l'une des revendications 1 à 8, **caractérise par le fait que**, dans la zone de tête (7), le tuyau d'entrée d'air (5) est pourvu d'une surface de section croissante - par rapport à sa direction longitudinale et vu dans le sens de transport.

10. Dispositif filtrant selon l'une des revendication 1 à 9, **caractérisé par le fait que**, dans la zone de tête (7), un ventilateur radial (2) est disposé en amont du tuyau d'entrée d'air (5).

11. Dispositif filtrant selon l'une des revendication 1 à 10, **caractérisé par le fait que** l'élément collecteur (18) est pourvu d'un tiroir échangeable (30).

12. Dispositif filtrant selon l'une des revendications 1 à 10, **caractérisé par le fait que** l'élément collecteur (18) est pourvu d'au moins un clapet basculant (36).

13. Dispositif filtrant selon revendication 12, **caractérisé par le fait que** la charnière (37) du clapet (36) est disposée dans la zone de limitation inférieure de l'élément collecteur (18).
